# EUROPEAN PATENT APPLICATION

(11) **EP 3 974 205 A1**
(43) Date of publication of application: **30.03.2022**
(21) Application number: 20923686.8
(22) Date of filing: 25.05.2020
(51) Int. Cl.: B60B 21/02, B60B 21/12

(54) **VEHICLE WHEEL AND RESONANCE NOISE REDUCING BODY**

(71) Applicant: Toyota Tsusho Corporation, Nagoya 450-8575 (JP); TOYOTSU AUTOMOTIVE CREATION CORPORATION, Nakamura-ku Nagoya-shi Aichi 4508575 (JP)
(72) Inventor: FURUMORI, Yuho, Nagoya-shi Aichi 4500003 (JP); TACHINO, Tsukasa, Nagoya-shi Aichi 4500003 (JP); KOYAMA, Takashi, Nagoya-shi Aichi 4508575 (JP)
(74) Representative: Reich, Jochen
(86) International application number: PCT/JP2020/020486
(87) International publication number: WO 2021/240582

(57) **Abstract**

A resonator (30) is engaged with an outer circumferential surface of a rim (21) of a wheel (20) so as to be fixed to the outer circumferential surface. The resonator (30) includes a body (31) including an elongated resonant space (S) extending along the outer circumferential surface of the rim (21) and includes an opening (34) arranged at the body (31) to connect, to an outside of the resonant space (S), at least one of two ends of the resonant space (S) in an extension direction of the resonant space (S). The resonant space (S) and the opening (34) form a resonance tube.

## Description

### TECHNICAL FIELD

The present disclosure relates to a vehicle wheel and a resonance reducer arranged on the vehicle wheel.

### BACKGROUND ART

A wheel assembly for an automobile includes a wheel and a tire fitted to the wheel (for example, Patent Document 1). In the wheel assembly, the inner surface of the tire and the outer circumferential surface of the rim of the wheel define an air chamber. It is known that a tire cavity resonance occurs in the air chamber when the vehicle travels. The tire cavity resonance is caused by the resonant vibration of the air in the air chamber when the tire is vibrated by the contact with a travel road surface. The tire cavity resonance results in road noise.

### PRIOR ART DOCUMENTS

### Patent Documents

Patent Document 1: Japanese Laid-Open Patent Publication No. 2006-193042

### SUMMARY OF THE INVENTION

### Problems that the Invention is to Solve

Recently, to improve product marketability, the demand for reducing in-vehicle noise has increased. The demand for reducing road noise, which is one type of the in-vehicle noise, has also increased.

It is an objective of the present disclosure to provide a vehicle wheel and a resonance reducer capable of reducing road noise.

### Means for Solving the Problem

A vehicle wheel according to an aspect of the present disclosure includes a rim and a resonance reducer that is engaged with an outer circumferential surface of a rim so as to be fixed to the outer circumferential surface of the rim. The resonance reducer includes a body including an elongated resonant space extending along the outer circumferential surface of the rim and includes an opening arranged at the body to connect, to an outside of the resonant space, at least one of two ends of the resonant space in an extension direction of the resonant space. The resonant space and the opening form a resonance tube.

The annular tire air chamber is defined in the wheel assembly by the outer circumferential surface of the rim and the inner circumferential surface of the tire, which is coupled to the vehicle wheel. In the tire air chamber, a tire cavity resonance occurs due to air column resonance of the gas (for example, air) in the tire air chamber.

In this structure, the resonance tube is arranged in the tire air chamber by fixing the resonance reducer to the outer circumferential surface of the rim through engagement. Further, resonance can be generated in the resonance tube at a resonant frequency (a frequency corresponding to the length of the resonance tube). Thus, by causing the sound waves (standing waves) at the resonant frequency that occurs in the resonance tube to interfere with the tire cavity resonance that occurs in the tire air chamber so that they are offset at least partially, generation of the tire cavity resonance is suppressed. This structure reduces the tire cavity resonance and ultimately reduces road noise.

In the above-described vehicle wheel, the opening may be arranged at each of the two ends of the resonant space in the extension direction. The resonance tube may be a resonance tube with two open ends.

In this structure, the two openings connect the two ends of the resonant space in the extension direction to the outside of the resonant space, more specifically, to the inside of the tire air chamber. Thus, as compared with a structure in which only one end of the resonant space connects to the tire air chamber, air and moisture easily flow through the resonant space. Accordingly, when moisture moves into the resonant space, the moisture and the air that flows through the resonant space are easily discharged out of the resonant space. This maintains the noise reduction effect, which would be decreased by accumulation of moisture in the resonant space.

In the above-described vehicle wheel, the body may include a first end and a second end in a direction of a central axis of the vehicle wheel. The resonance reducer may include an engagement piece that protrudes outward in a radial direction of the vehicle wheel from the first end of the body and extends in a circumferential direction of the vehicle wheel. The outer circumferential surface of the rim may include a wall portion extending in the radial direction. The wall portion may include an engagement groove recessed in the direction of the central axis. The engagement piece may be fitted to the engagement groove.

In this structure, the extension direction of the engagement piece that functions as an arm member for engagement is the radial direction of the vehicle wheel. Thus, as compared with a structure in which the extension direction extends in the direction of the central axis of the vehicle wheel, the resonance reducer is shortened in the direction of the central axis. Accordingly, the resonance reducer, which includes the elongated resonant space, is arranged on the rim, which has a predetermined width, with a high degree of freedom.

In the above-described vehicle wheel, the rim may include a well, and the engagement groove may be arranged on a side wall of the well.

In this structure, the vehicle wheel includes the well, which is recessed inward in the radial direction, in the central region of the rim in the direction of the central axis. In this structure, the engagement groove is arranged using the well of the vehicle wheel.

In the above-described vehicle wheel, the engagement piece may include a basal end coupled to the body, and the engagement piece may be made of an elastic material and configured to be tilted in the direction of the central axis with respect to the basal end when elastically deformed.

In this structure, by positioning the resonance reducer relative to the outer circumferential surface of the rim and then pressing the resonance reducer against the rim, the engagement piece of the resonance reducer is elastically deformed in the direction of the central axis and fitted to the engagement groove of the rim. The resonance reducer can be coupled to the wheel through such a simple task.

In the above-described vehicle wheel, the resonance reducer may include an engagement projection that protrudes in the direction of the central axis from the second end of the body. The wall portion may be a first wall portion and the engagement groove may be a first engagement groove. The outer circumferential surface of the rim may include a second wall portion extending in the radial direction. The second wall portion may include a second engagement groove recessed in the direction of the central axis. The engagement projection may be fitted to the second engagement groove.

In this structure, the resonance reducer is positioned relative to the outer circumferential surface of the rim by hooking the engagement projection of the resonance reducer on the second engagement groove of the vehicle wheel. The resonance reducer can be coupled to the wheel by pressing the resonance reducer against the rim in this state.

In the above-described vehicle wheel, an entirety of the resonance reducer may be made of an elastic material. The resonance reducer may include an opposing surface opposing the outer circumferential surface of the rim, the opposing surface including a protrusion that protrudes so as to project inward in a radial direction of the vehicle wheel. Two ends of the body in a direction of a central axis of the vehicle wheel may be engaged with the outer circumferential surface of the rim with a tip of the protrusion pressed against the outer circumferential surface of the rim.

In this structure, the resonance reducer can be firmly coupled to the wheel using the elastic force of the resonance reducer.

In the above-described vehicle wheel, the resonant space may extend in a circumferential direction of the rim along the outer circumferential surface of the rim such that the resonant space is folded back at at least one position.

As the extension length of the resonance tube increases, low-frequency noise decreases. However, a mere increase in the extension length of the resonant space lengthens the resonance reducer in the circumferential direction and therefore enlarges the apparatus for manufacturing the resonance reducer. The above-described structure lengthens the extension of the resonant space and shortens the resonance reducer in the circumferential direction.

A resonance reducer according to an aspect of the present disclosure is configured to be engaged with an outer circumferential surface of a rim so as to be fixed to the outer circumferential surface of the rim. The resonance reducer includes a body extending in an arcuate manner. The resonance reducer also includes a resonant space portion including an elongated resonant space extending in the body and an opening arranged at the body to connect, to an outside of the resonant space, at least one of two ends of the resonant space in an extension direction of the resonant space, the resonant space portion forming at least part of a resonance tube. The resonance reducer further includes an engagement portion configured to be engaged with the rim so as to fix the body to the rim.

The annular tire air chamber is defined in the wheel assembly by the outer circumferential surface of the rim and the inner circumferential surface of the tire, which is coupled to the vehicle wheel. In the tire air chamber, a tire cavity resonance occurs due to air column resonance of the gas (for example, air) in the tire air chamber.

In this structure, the resonance tube is arranged in the tire air chamber by fixing the resonance reducer to the outer circumferential surface of the rim through engagement. Further, resonance can be generated in the resonance tube at a resonant frequency (a frequency corresponding to the length of the resonance tube). Thus, by causing the sound waves (standing waves) at the resonant frequency that occurs in the resonance tube to interfere with the tire cavity resonance that occurs in the tire air chamber so that they are offset at least partially, the tire cavity resonance is prevented from occurring. This structure reduces the tire cavity resonance and ultimately reduces road noise.

In the above-described resonance reducer, the opening may be arranged at each of the two ends of the resonant space in the extension direction. The resonance tube may be a resonance tube with two open ends.

In this structure, the two openings connect the two ends of the resonant space in the extension direction to the outside of the resonant space. Thus, as compared with a structure in which only one end of the resonant space connects to the outside of the resonant space, air and moisture easily flow through the resonant space. Accordingly, when moisture moves into the resonant space, the moisture and the air that flows through the resonant space are easily discharged out of the resonant space. This maintains the noise reduction effect, which would be decreased by accumulation of moisture in the resonant space.

In the above-described resonance reducer, the body may include a first end and a second end in a direction of a central axis of an arc of the body. The engagement portion may include an engagement piece that protrudes outward in a radial direction of the arc from the first end of the body and extends in an extension direction of the body.

In this structure, the engagement piece protrudes in the radial direction. Thus, as compared with a structure in which the engagement piece protrudes in the direction of the central axis of the vehicle wheel, the resonance reducer is shortened in the direction of the central axis. Accordingly, the resonance reducer, which includes the elongated resonant space, is arranged on the rim, which has a limited width, with a high degree of freedom.

In the above-described resonance reducer, the engagement piece may include a basal end coupled to the body, and the engagement piece may be made of an elastic material and configured to be tilted in the direction of the central axis with respect to the basal end when elastically deformed.

In this structure, the resonance reducer can be engaged with the rim of the vehicle wheel through a simple task of fitting the engagement piece of the resonance reducer to the rim while elastically deforming the engagement piece in the direction of the central axis.

In the above-described resonance reducer, the engagement portion may include an engagement projection that protrudes in the direction of the central axis from the second end of the body.

In this structure, the resonance reducer can be coupled to the vehicle wheel by pressing the resonance reducer against the outer circumferential surface of the rim with the engagement projection of the resonance reducer pressed against the outer circumferential surface of the rim of the vehicle wheel.

In the above-described resonance reducer, an entirety of the resonance reducer may be made of an elastic material. The resonance reducer may include an inner circumferential surface on an inner side of the arc in a radial direction, the inner surface including a protrusion that protrudes so as to project inward in the radial direction. The engagement portion may be arranged at each of two ends of the body in a direction of a central axis of the arc.

In this structure, the resonance reducer can be firmly fixed to the wheel using the elastic force of the resonance reducer by engaging the resonance reducer using the engagement portion with the rim with the tip of the protrusion pressed against the rim.

In the above-described resonance reducer, the resonant space may extend in an extension direction of the body such that the resonant space is folded back at at least one position.

As the extension length of the resonance tube increases, low-frequency noise decreases. However, a mere increase in the extension length of the resonant space lengthens the resonance reducer and therefore enlarges the apparatus for manufacturing the resonance reducer. The above-described structure lengthens the extension of the resonant space and shortens the resonance reducer.

### BRIEF DESCRIPTION OF THE DRAWINGS

Fig. 1 is a perspective view showing a vehicle wheel and resonators according to an embodiment.
Fig. 2 is a perspective view showing one of the resonators of Fig. 1.
Fig. 3 is a plan view showing one of the resonators of Fig. 1.
Fig. 4 is a front view showing one of the resonators of Fig. 1.
Fig. 5 is a cross-sectional view showing the cross-section taken along line 5-5 in Fig. 3.
Fig. 6 is a cross-sectional view showing the cross-section of the wheel to which one of the resonators of Fig. 1 is coupled.
Fig. 7 is a diagram showing how the resonators of Fig. 1 are arranged.
Fig. 8 is a front view showing the wheel to which the tire is coupled.
Fig. 9 is a cross-sectional view showing the cross-section taken along line 9-9 in Fig. 8.
Figs. 10A to 10D are diagrams illustrating the tasks of coupling one of the resonators to the wheel.
Fig. 11 is a cross-sectional view showing the cross-section of the wheel to which a resonator according to a modification is coupled.

### MODES FOR CARRYING OUT THE INVENTION

A vehicle wheel and a resonance reducer according to an embodiment will now be described.

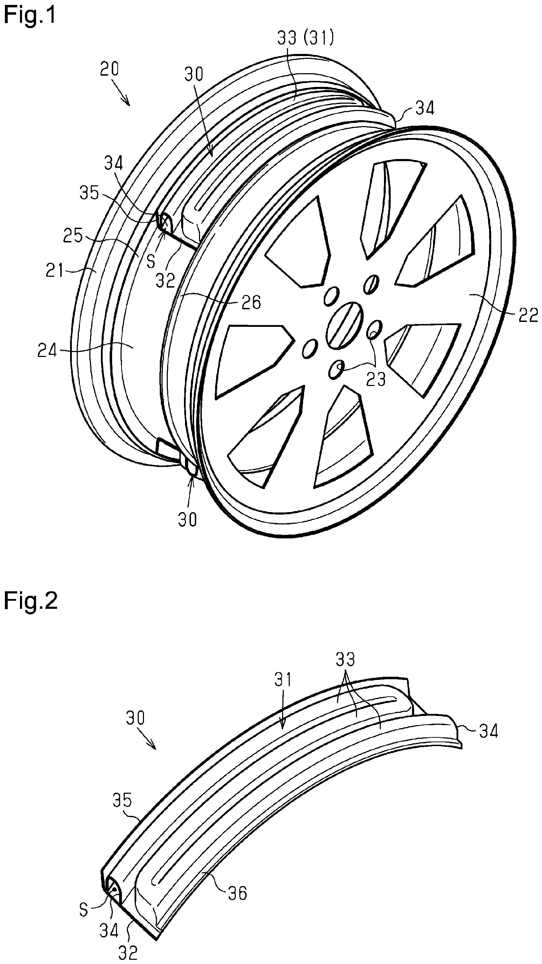

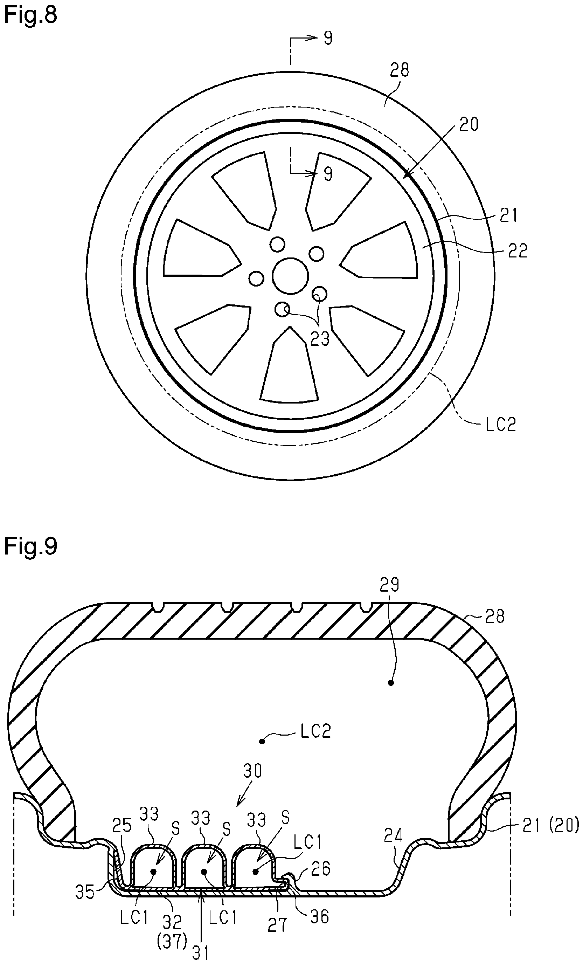

Fig. 8 shows a wheel assembly that includes a wheel 20 and a tire 28 that is coupled to the wheel 20. As shown in Fig. 1, the wheel 20 includes a tubular rim 21. The tire 28 (refer to Fig. 8) is fitted to the rim 21 so as to cover the outer circumference of the rim 21.

The wheel 20 includes a substantially circular center disc 22. The center disc 22 is provided integrally with the rim 21 so as to close one of the openings at the two ends of the tubular rim 21 in the axial direction. The center disc 22 includes bolt holes 23 that are used to couple the wheel 20 to the vehicle.

The wheel 20 includes multiple (two in the present embodiment) resonators 30. The resonators 30 are resonance reducers that reduce in-vehicle noise (road noise). The resonators 30 are coupled to the outer circumferential surface of the rim 21 of the wheel 20. The resonators 30 extend along the outer circumferential surface of the resonator 30 in an arcuate manner. The resonators 30 are arranged at equal intervals in the circumferential direction of the rim 21.

The structure of the resonator 30 will now be described in detail.

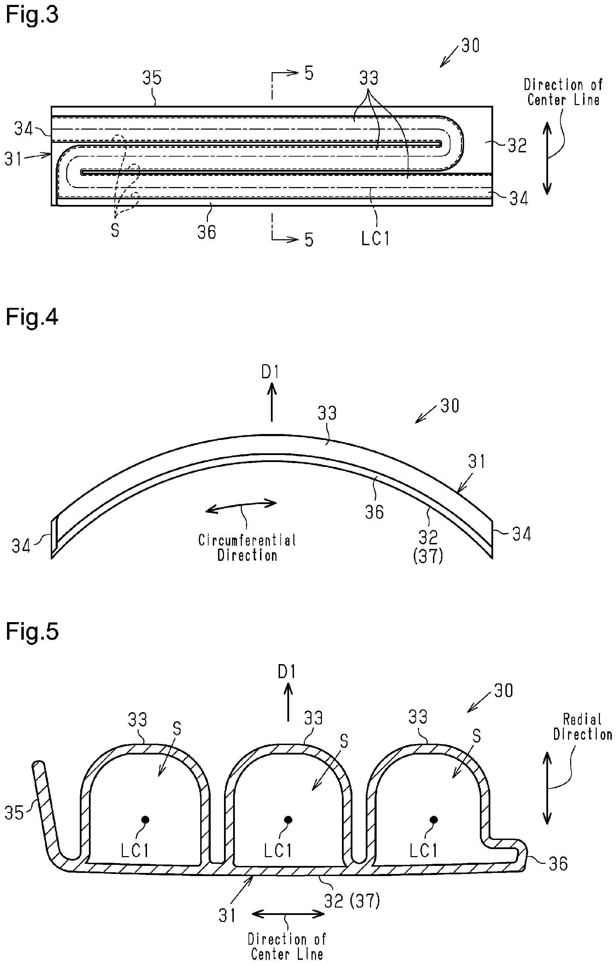

As shown in Figs. 2 to 5, the resonator 30 includes a body 31 that extends in an arcuate manner. As shown in Figs. 3 and 5, the inner side of the body 31 defines an elongated resonant space S. The resonant space S basically extends in the circumferential direction along the outer circumferential surface of the rim 21. More specifically, the resonant space S is folded back at two positions in a serpentine manner. The resonant space S extends such that each of the sections in the longitudinal direction has the same cross-sectional area. The cross-sectional area of the resonant space S is set in, for example, a range from 25 to 1200 mm².

As shown in Figs. 2 to 5, the body 31 includes a bottom wall 32 and a ridge 33. The bottom wall 32 extends in an arcuate manner along the outer circumferential surface of the rim 21 (refer to Fig. 1) of the wheel 20. The ridge 33 protrudes outward from the bottom wall 32 in the radial direction. The ridge 33 has a U-shaped cross-section. The ridge 33 is folded back at two positions on the outer surface of the bottom wall 32 in a serpentine manner. As shown in Fig. 5, in the present embodiment, the resonant space S is defined by the inner surface of the ridge 33 and the outer surface of the bottom wall 32.

As shown in Figs. 2 to 5, the body 31 includes an opening 34 at each of the two ends of the elongated resonant space S. The openings 34 connect the inside and the outside of the resonant space S to each other. The two ends of the resonant space S in the extension direction are connected to the outside of the resonant space S by the two openings 34. In the present embodiment, the opening area of each opening 34 is equal to the cross-sectional area of the resonant space S. The openings 34 are provided so as to open the resonant space S in the circumferential direction.

As shown in Figs. 3 and 5, in the present embodiment, the inner part of the body 31 of the resonator 30 includes a resonance tube with the two open ends that includes the resonant space S and the two openings 34. In the present embodiment, the resonant space S and the two openings 34 correspond to a resonant space portion.

As shown in Fig. 5, the portion of the body 31 opposing the outer circumferential surface of the rim 21 (i.e., the bottom wall 32) is curved and extended in the direction of the central axis of the rim 21 such that the bottom wall 32 projects inward in the radial direction of the rim 21. In the present embodiment, the entire inner circumferential surface of the bottom wall 32 of the body 31 (i.e., the entire opposing surface opposing the outer circumferential surface of the rim 21) includes a protrusion 37 that protrudes so as to project inward (downward in Fig. 5) in the radial direction.

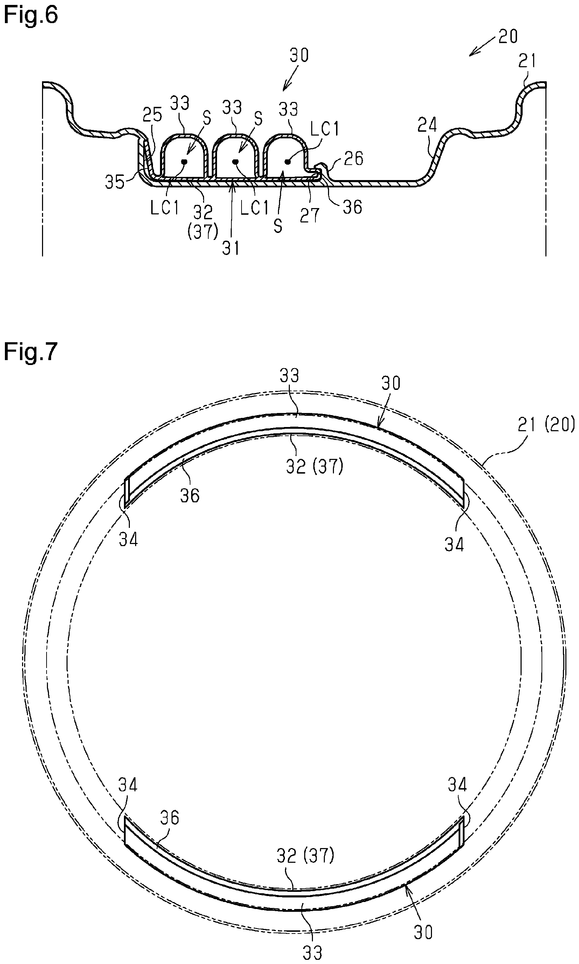

The body 31 (i.e., the bottom wall 32) includes a first end (left end in Fig. 5) and a second end (right end in Fig. 5) in the direction of the central axis. The first end of the bottom wall 32 includes an engagement piece 35. The engagement piece 35, which is plate-shaped, extends in the circumferential direction and protrudes outward (upward in Fig. 5) in the radial direction from the end of the bottom wall 32. More specifically, the engagement piece 35 protrudes outward (upward in Fig. 5) in the radial direction at an angle that is slightly tilted relative to a plane orthogonal to the central axis of the rim 21 such that the engagement piece 35 becomes farther from the body 31 toward the distal end. As shown in Figs. 1 and 6, the rim 21 includes a well 24 in an intermediate region in the direction of the central axis of the rim 21. The well 24 is recessed inward in the radial direction. The well 24 includes a circumferential wall and two side walls extending outward in the radial direction from the two ends of the circumferential wall in the axial direction. The engagement piece 35 extends along a side wall of the well 24. The engagement piece 35 is configured to be tilted in the direction of the central axis with respect to its basal end (more specifically, the end coupled to the body 31) when elastically deformed.

As shown in Figs. 2 to 5, the second end of the bottom wall 32 (i.e., the end opposite to the end where the engagement piece 35 is located), which is the right end of Fig. 5, includes an engagement projection 36. The engagement projection 36 is a ridge that protrudes in the circumferential direction from the second end of the bottom wall 32 and extends in the direction of the central axis. As shown in Fig. 5, in the present embodiment, the engagement projection 36 is hollow and the inner space of the engagement projection 36 is part of the resonant space S.

The resonator 30 is made of an elastic synthetic plastic material (polypropylene in the present embodiment). The resonator 30 is formed through a blow molding process using a die apparatus. Die cutting is performed by the die apparatus in the direction oriented outward in the radial direction at the central position of the resonator 30 in its extending direction (the direction indicated by arrow D1 in Figs. 4 and 5). A draft angle is set to each part of the outer surface of the resonator 30 with respect to the die-cutting direction D1.

As shown in Figs. 1 and 6, the outer circumferential surface of the rim 21 includes an engagement groove 25. The engagement groove 25 is provided on a wall portion of the outer circumferential surface of the rim 21 extending in the radial direction (more specifically, on one of the side walls of the rim 21). The engagement groove 25 has a cross-sectional shape in which the side wall of the well 24 is recessed in the direction of the central axis, and extends over the entire circumference in the circumferential direction. In the present embodiment, when the resonator 30 is coupled to the wheel 20, the engagement piece 35 of the resonator 30 is fitted to the engagement groove 25 of the wheel 20. The side wall of the well 24 includes an engagement ridge that engages with the distal end of the engagement piece 35 at the end of the engagement groove 25 located outward in the radial direction. In the present embodiment, the engagement groove 25 corresponds to a first engagement groove and the portion of the side wall of the well 24 on which the engagement groove 25 is provided corresponds to a first wall portion.

The outer circumferential surface of the rim 21 includes an engagement wall 26. The engagement wall 26 protrudes outward in the radial direction from the circumferential wall of the well 24 and extends over the entire circumference in the circumferential direction.

The engagement wall 26 is a wall portion extending in the radial direction. The engagement wall 26 includes an engagement groove 27 on one of the side surfaces of the engagement wall 26 that opposes the engagement groove 25. The engagement groove 27 has a cross-sectional shape in which the side surface of the engagement wall 26 is recessed in the direction of the central axis, and extends over the entire circumference in the circumferential direction. In the present embodiment, when the resonator 30 is coupled to the wheel 20, the engagement projection 36 of the resonator 30 is fitted to the engagement groove 27 of the wheel 20. The engagement wall 26 includes an engagement piece that engages with the engagement projection 36 at the end of the engagement wall 26 located outward in the radial direction. In the present embodiment, the engagement groove 27 corresponds to a second engagement groove, and the side surface of the engagement wall 26 corresponds to a second wall portion.

To couple the resonator 30 to the wheel 20, the resonator 30 is fitted between the engagement groove 25 of the side wall of the well 24 of the wheel 20 and the engagement groove 27 of the side surface of the engagement wall 26. More specifically, when the resonator 30 is coupled to the wheel 20 (as shown in Fig. 6), the engagement piece 35 of the resonator 30 is fitted to the engagement groove 25 of the wheel 20 and the engagement projection 36 of the resonator 30 is fitted to the engagement groove 27 of the wheel 20. In this manner, in the wheel 20 of the present embodiment, the two ends of the body 31 of the resonator 30 in the direction of the central axis are engaged with and fitted to the outer circumferential surface of the rim 21.

It is assumed that the resonator 30 with the engagement piece 35 and the engagement projection 36 respectively fitted to the engagement groove 25 and the engagement groove 27 is in a free state where the resonator 30 is not elastically deformed. In this state, when the cross-sectional shape of the rim 21 and the cross-sectional shape of the resonator 30 along the central axis are overlapped with each other, the wheel 20 and the resonator 30 are arranged such that the rim 21 and the bottom wall 32 of the resonator 30 overlap each other to a small extent (for example, 20 µm).

Thus, when the engagement piece 35 and the engagement projection 36 of the resonator 30 are fitted to the engagement groove 25 and the engagement groove 27 of the wheel 20, the resonator 30 is restricted from moving in the radial direction and the bottom wall 32 (more specifically, the tip of the protrusion 37) of the resonator 30 is pressed against the outer circumferential surface of the rim 21 of the wheel 20. In the present embodiment, the elastic force of the resonator 30 is utilized to firmly couple the resonator 30 to the rim 21 of the wheel 20.

As shown in Figs. 1 and 7, the rim 21 is provided with multiple (two in the present embodiment) resonators 30 at equal intervals. Each resonator 30 is shaped such that the opening positions of the openings 34 at the two ends in the circumferential direction are deviated from each other by 90° in the circumferential direction. Thus, in the present embodiment, two resonators 30 are arranged on the rim 21 such that four openings 34 of the two resonators 30 are laid out at angular intervals of 90°.

In the wheel 20 of the present embodiment, the extension length of the resonant space S of the resonator 30 is defined as follows. The length of the center line LC1 (Figs. 3 and 9) extending through the center of the resonant space S of the resonator 30 is referred to as LA. The length of the center line LC2 (Figs. 8 and 9) extending through the center of an annular tire air chamber 29 is referred to as LB. The tire air chamber 29 is defined by the outer circumferential surface of the rim 21 and the inner circumferential surface of the tire 28 that is coupled to the wheel 20. In this case, the extension length of the resonant space S is defined so as to satisfy the relational equation LA/LB = 0.50. In the present embodiment, the center line LC1 connects the geometric center of gravity of the cross-section of each section of the resonant space S (more specifically, the cross-section on a plane including the central axis of the rim 21), and the center line LC2 connects the geometric center of gravity of the cross-section of each section of the tire air chamber 29 (more specifically, the cross-section on a plane including the central axis of the rim 21). The extension length of the resonant space S is substantially equal to the length LA of the center line LC1.

The task of coupling the resonator 30 to the wheel 20 will now be described.

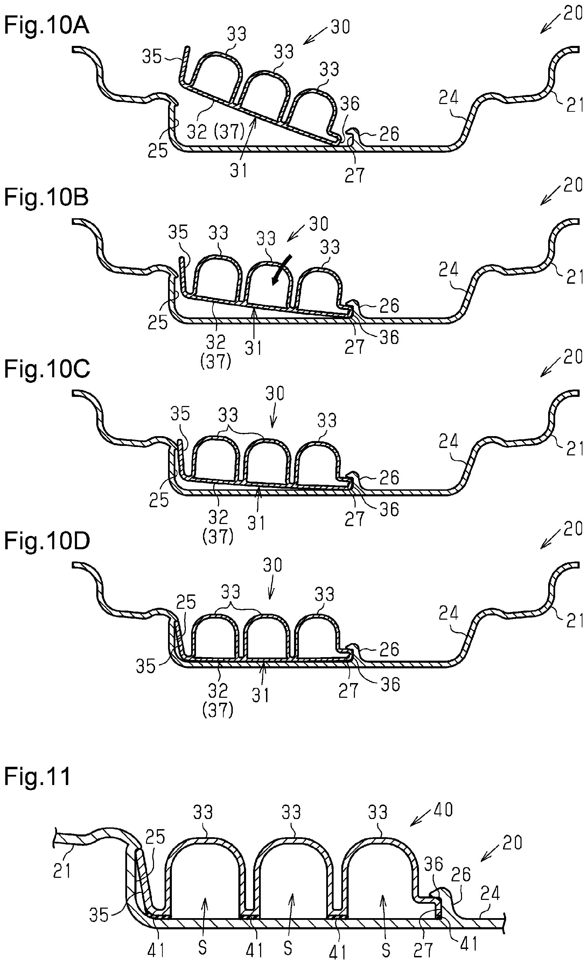

In this task, first, as shown in Fig. 10A and 10B, a distal portion of the engagement projection 36 of the resonator 30 is inserted into and hooked on the engagement groove 27 of the rim 21 of the wheel 20. This allows the resonator 30 to be positioned relative to the outer circumferential surface of the rim 21.

Then, as shown by the solid arrow in Fig. 10B, the resonator 30 is tilted from the wheel 20 with respect to the portion where the engagement projection 36 engages with the engagement groove 27 so that the resonator 30 approaches the rim 21.

During such tilting of the resonator 30, as shown in Fig. 10C, the outer surface of the engagement piece 35 of the resonator 30 is abutted against and pressed against the side wall of the well 24 of the wheel 20 (more specifically, the engagement ridge at the end of the engagement groove 25 located outward in the radial direction). This elastically deforms the engagement piece 35 of the resonator 30 so as to avoid the side wall of the well 24 so that the engagement piece 35 tilts in the direction of the central axis (tilts rightward in Fig. 10C).

Subsequently, as shown in Fig. 10D, the outer surface of the bottom wall 32 of the resonator 30 contacts the outer circumferential surface of the rim 21 (more specifically, the circumferential wall of the well 24). After the distal end of the engagement piece 35 moves to the position opposing the engagement groove 25 of the well 24, the engagement piece 35 is restored from the elastically-deformed state so that the engagement piece 35 is tilted in the direction of the central axis (tilted leftward in Fig. 10D) and fitted to the engagement groove 25.

Thus, in the present embodiment, with the bottom wall 32 pressed against the circumferential wall of the well 24, the engagement projection 36 is engaged with the engagement groove 27 and the engagement piece 35 is fitted to the engagement groove 25 so that the resonator 30 is coupled to the well 24.

In the present embodiment, the engagement piece 35 of the resonator 30 is configured to be tilted in the direction of the central axis with respect to the end coupled to the body 31 through elastic deformation. Thus, by positioning the resonator 30 relative to the outer circumferential surface of the rim 21 and then pressing the resonator 30 against the rim 21, the engagement piece 35 of the resonator 30 is elastically deformed in the direction of the central axis and fitted to the engagement groove 25 of the rim 21. The present embodiment allows the resonator 30 to be coupled to the wheel 20 through such a simple task.

The operation of the wheel 20 and the resonator 30 according to the present embodiment will now be described.

As shown in Fig. 9, the annular tire air chamber 29 is defined in the wheel assembly by the outer circumferential surface of the rim 21 and the inner circumferential surface of the tire 28. In the tire air chamber 29, a tire cavity resonance occurs due to air column resonance of the gas (for example, air) in the tire air chamber 29.

In the present embodiment, the resonator 30 is coupled to the outer circumferential surface of the rim 21 to reduce the tire cavity resonance. Thus, the resonance tube with the two open ends that includes the resonant space S, which is defined in the resonator 30, and the two openings 34 is arranged in the tire air chamber 29.

The present embodiment allows resonance to occur in the resonance tube of the resonator 30 at a resonant frequency corresponding to the length of the resonance tube when the vehicle travels. By causing the vibration (sound waves) at the resonant frequency that occurs in the resonance tube to interfere with the tire cavity resonance that occurs in the tire air chamber 29 so that they are offset at least partially, generation of the tire cavity resonance is suppressed. Thus, the present embodiment reduces the tire cavity resonance and ultimately reduces road noise.

To reduce the tire cavity resonance, as the frequency of the tire cavity resonance becomes closer to the frequency of the resonance vibration that occurs in the resonance tube of the resonator 30, the tire cavity resonance is reduced to a greater extent. Wavelength F1 of the resonance vibration (more specifically, primary resonance vibration) that occurs in the resonance tube of the resonator 30 is about twice as long as the length L1 of the resonance tube (F1 / L1 ≈ 2). Wavelength F2 of the tire cavity resonance (more specifically, primary resonance vibration) that occurs in the tire air chamber 29 is substantially equal to the length L2 of the tire air chamber 29 in the circumferential direction (F2 / L2 ≈ 1).

In this respect, in the present embodiment, the extension length of the resonant space S is defined such that the relationship between the length LA of the center line LC1 of the resonant space S (LA is almost equal to the length L1 of the resonance tube of the resonator 30) and the length LB of the center line LC2 of the tire air chamber 29 (LB is almost equal to the length L2 of the tire air chamber 29 in the circumferential direction) satisfies the relational equation LA/LB = 0.50. In other words, the length L1 of the resonance tube of the resonator 30 is substantially half the length L2 of the tire air chamber 29 in the circumferential direction. In this case, the wavelength F1 of the resonance vibration that occurs in the resonance tube of the resonator 30 is substantially equal to the wavelength F2 of the tire cavity resonance. Consequently, the frequency of the resonance vibration is substantially equal to the frequency of the tire cavity resonance. This further reduces the tire cavity resonance.

As described above, the wavelength F2 of the tire cavity resonance is substantially equal to the length L2 of the tire air chamber 29 in the circumferential direction. Thus, the interval between the section with a high sound pressure and the section with a low sound pressure in the tire cavity resonance is an interval corresponding to one-fourth of the wavelength F2, that is, angular intervals of 90° in the circumferential direction. In the present embodiment, four openings 34 of two resonators 30 are laid out at angular intervals of 90° in the circumferential direction. Employing such a structure reduces the tire cavity resonance to a greater extent.

In the present embodiment, the two openings 34 at the body 31 of each resonator 30 connect the two ends of the resonant space S in the extension direction to the outside of the resonant space S, more specifically, to the inside of the tire air chamber 29. Thus, as compared with a structure in which only one end of the resonant space connects to the tire air chamber 29, air and moisture easily flow through the resonant space S in the resonator 30. Accordingly, when moisture moves into the resonant space S, the moisture and the air that flows through the resonant space S are easily discharged out of the resonant space S. This maintains the noise reduction effect, which would be decreased by accumulation of moisture in the resonant space S.

As the extension length of the resonance tube (more specifically, resonant space S) in the resonant space S increases, low-frequency noise having a long wavelength decreases. However, a mere increase in the extension length of the resonant space S lengthens the resonator 30 in the circumferential direction and therefore enlarges the apparatus for manufacturing the resonator 30.

In the present embodiment, the resonant space S is folded back at two positions in a serpentine manner. This increases the extension length of the resonant space S while limiting the lengthening of the resonator 30 in the circumferential direction. Thus, the resonator 30 including the resonant space S with a long extension is utilized to reduce the low-frequency tire cavity resonance (road noise). Additionally, an increase in size of the apparatus for manufacturing the resonator 30 is limited.

The wheel 20 of the present embodiment includes the well 24 in the central region of the rim 21 in the direction of the central axis. The well 24 is recessed inward in the radial direction. The two side walls of the well 24 extend in the radial direction. In the present embodiment, one of the two side walls of the well 24 includes the engagement groove 25, which engages with the engagement piece 35 extending in the radial direction. This eliminates the need for an additional dedicated wall and allows the engagement groove 25 to be arranged on the outer circumferential surface of the rim 21 using the side wall of the well 24. This simplifies the structure of the wheel 20.

To couple the resonator 30 to the wheel 20, the engagement piece 35 of the resonator 30 functions as an arm member that tilts through elastic deformation. In the present embodiment, the engagement piece 35 extends in the circumferential direction and protrudes outward in the radial direction from the end of the body 31 in the direction of the central axis. Thus, as compared with a structure in which an engagement arm member extends in the direction of the central axis, the resonator 30 is shortened in the direction of the central axis. Accordingly, the resonator 30, which includes the elongated resonant space S, is arranged on the rim 21, which has a predetermined width, with a high degree of freedom. This allows the resonator 30 to be located at a position suitable for reducing noise.

As described above, the present embodiment provides the following advantages.
(1) The resonator 30 is engaged with the outer circumferential surface of the rim 21 of the wheel 20 so as to be fixed to the outer circumferential surface of the rim 21. This reduces the tire cavity resonance and ultimately reduces road noise.
(2) The resonance tube with the two open ends that includes the resonant space S and the two openings 34 is arranged in the tire air chamber 29. This maintains the noise reduction effect, which would be decreased by accumulation of moisture in the resonant space S.
(3) The plate-shaped engagement piece 35 is arranged at an end of the bottom wall 32 of the body 31 of the resonator 30 in the direction of the central axis. The engagement piece 35 protrudes outward in the radial direction and extends in the circumferential direction. The engagement groove 25, which is recessed in the direction of the central axis, is arranged on a side wall of the well 24 of the wheel 20. The engagement piece 35 of the resonator 30 is fitted to the engagement groove 25 of the wheel 20. Accordingly, the resonator 30, which includes the elongated resonant space S, is arranged on the rim 21, which has the predetermined width, with a high degree of freedom.
(4) Without the arrangement of an additional dedicated wall, the engagement groove 25 can be arranged on the outer circumferential surface of the rim 21 using the well 24 of the wheel 20. This simplifies the structure of the wheel 20.
(5) The engagement piece 35 of the resonator 30 is configured to be tilted in the direction of the central axis with respect to the end coupled to the body 31 through elastic deformation. This allows the resonator 30 to be coupled to the wheel 20 through a simple task of positioning the resonator 30 relative to the outer circumferential surface of the rim 21 and then pressing the resonator 30 against the rim 21.
(6) The engagement projection 36 is arranged at an end of the bottom wall 32 of the body 31 of the resonator 30 in the direction of the central axis. The engagement projection 36 protrudes outward in the direction of the central axis and extends in the circumferential direction. The side surface of the engagement wall 26 protruding from the outer circumferential surface of the rim 21 includes the engagement groove 27, which has a cross-sectional shape recessed in the direction of the central axis and extends over the entire circumference. The engagement projection 36 of the resonator 30 is fitted to the engagement groove 27 of the wheel 20. In such a structure, the resonator 30 can be positioned relative to the outer circumferential surface of the rim 21 by hooking the distal portion of the engagement projection 36 of the resonator 30 on the engagement groove 27 of the wheel 20.
(7) When the engagement piece 35 and the engagement projection 36 of the resonator 30 are respectively fitted to the engagement groove 25 and the engagement groove 27 of the wheel 20, the resonator 30 is restricted from moving in the radial direction and the bottom wall 32 of the resonator 30 is pressed against the outer circumferential surface of the rim 21. Thus, the elastic force of the resonator 30 is utilized to firmly couple the resonator 30 to the rim 21 of the wheel 20.
(8) The resonant space S is folded back at two positions in a serpentine manner. The resonant space S extends in the circumferential direction along the outer circumferential surface of the rim 21. Thus, the resonator 30 including the resonant space S with a long extension is utilized to reduce the low-frequency tire cavity resonance. Additionally, an increase in size of the apparatus for manufacturing the resonator 30 is limited.

The above-described embodiment may be modified as follows. The above-described embodiments and the following modifications can be combined as long as the combined modifications remain technically consistent with each other.

The resonator 30 may be made of any material that elastically deforms the resonator 30, such as a synthetic plastic material other than polypropylene, a rubber material, or a metal material.

The engagement projection 36 of the resonator 30 may have a solid structure.

The cross-sectional areas of the sections of the resonant space S in the extension direction may be slightly different from each other. That is, the resonant space S may have a fixed cross-sectional area or have a changing cross-sectional area in the extension direction.

The extension length of the resonant space S of the resonator 30 does not have to be defined such that the relationship between the length LA of the center line LC1 of the resonant space S and the length LB of the center line LC2 of the tire air chamber 29 satisfies the relational equation LA/LB = 0.50, and may be changed. To effectively reduce the tire cavity resonance, it is preferred that the extension length of the resonant space S be defined so as to satisfy a relational equation 0.45 ≤ (LA / LB) ≤ 0.55. In such a structure, the extension length of the resonance tube in the resonator 30 is almost the half the length of the tire air chamber 29 in the circumferential direction. This allows the frequency of the resonance vibration that occurs in the resonance tube of the resonator 30 to be close to the frequency of the tire cavity resonance and therefore reduces the tire cavity resonance effectively.

The resonant space S may extend so as to be folded back at one position or may extend so as to be folded back at three or more positions. Alternatively, the resonant space S may extend so as not to be folded back.

The shape of the outer surface of the bottom wall 32 of the resonator 30 may be changed. For example, the outer surface of the bottom wall 32 may be a curved surface that is curved in the direction of the central axis so as to project outward in the radial direction or may be shaped to extend in parallel to the circumferential wall of the well 24. Also, the inner circumferential surface of the bottom wall of the resonator may include a protrusion that protrudes in a partial manner. That is, the entire inner circumferential surface of the bottom wall of the resonator may be a protrusion or only part of the inner circumferential surface may be a protrusion. In this case, for example, one or more protrusions that extend in the circumferential direction, or one or more protrusions that protrude in a hemispherical manner may be employed. In such a structure, by fitting the resonator to the rim 21 with the tip of the protrusion pressed against the outer circumferential surface of the rim 21, the elastic force of the resonator is utilized to firmly fix the resonator to the rim 21.

The shapes of engagement portions (engagement piece 35, engagement projection 36, engagement groove 25, and engagement groove 27) that engage the resonator 30 with the wheel 20 may be changed. For example, the engagement piece 35 that protrudes outward in the radial direction may be arranged at the two ends of the body 31 of the resonator 30 in the direction of the central axis. In addition, an engagement piece that protrudes in the direction of the central axis (more specifically, an engagement piece that extends along the outer circumferential surface of the rim 21) may be arranged at the two ends of the body 31 of the resonator 30 in the direction of the central axis. Further, the engagement groove 27 and the engagement groove 25 may be arranged on the wheel 20 to correspond to the shapes of the engagement portions. Also, the outer circumferential surface of the rim 21 may include two protruding walls so that each of the protruding walls includes the engagement groove 27 and the engagement groove 25. As another option, the two side walls of the well 24 may each include the engagement groove 27 and the engagement groove 25.

The resonator 30 may be formed by joining the inner part of the resonator 30 in the radial direction (the part including the bottom wall 32) and the outer part of the resonator 30 in the radial direction (the part including the ridge 33), which are divided from each other. In this structure, the two divided parts are joined to each other to form a hollow resonator including the resonant space S.

A resonator 40 shown in Fig. 11 may be employed. The resonator 40 does not include the bottom wall 32 (refer to Fig. 6), and the ridge 33 opens inward in the radial direction (i.e., toward the rim 21). In the example shown in Fig. 11, the inner surface of the ridge 33 and the outer circumferential surface of the rim 21 define the resonant space S. In this structure, the inner space of the ridge 33 and the two openings 34 (refer to Fig. 2) form a resonant space portion.

In this structure, the portion of the resonator 40 in contact with the outer circumferential surface of the rim 21 may include a seal member 41 that seals this portion and is made of an elastic material (for example, a soft synthetic rubber material). In this structure, the seal member 41 seals the section between the resonator 40 and the outer circumferential surface of the rim 21. Thus, air (sound waves) is prevented from unnecessarily leaking out of the gap between the resonator 40 and the outer circumferential surface of the rim 21.

The wheel 20 may include only one resonator or may include three or more resonators. Multiple resonators do not have to be laid out at equal intervals in the circumferential direction of the rim 21 and may be laid out at different intervals in the circumferential direction.

The resonator 30 does not have to be shaped such that the positions of the two openings 34 are deviated from each other by 90° in the circumferential direction. The resonator 30 may be shaped such that the positions of the two openings 34 are deviated from each other by any angle. To effectively reduce the tire cavity resonance, it is preferred that the angle intervals of the two openings 34 in the circumferential direction be preferably between 80° and 100°.

A resonator in which only one end of the resonant space in the extension direction opens may be employed. In this structure, a resonance tube with one open end including the resonant space and one opening is arranged in the tire air chamber. The resonance tube reduces the tire cavity resonance and ultimately reduces road noise.

### DESCRIPTION OF THE REFERENCE NUMERALS

20) Wheel; 21) Rim; 22) Center Disc; 23) Bolt Hole; 24) Well; 25) Engagement Groove; 26) Engagement Wall; 27) Engagement Groove; 28) Tire; 29) Tire Air Chamber; 30, 40) Resonator; 31) Body; 32) Bottom Wall; 33) Ridge; 34) Opening; 35) Engagement Piece; 36) Engagement Projection; 37) Protrusion

## Claims

1. A vehicle wheel, comprising:
a rim; and
a resonance reducer that is engaged with an outer circumferential surface of the rim so as to be fixed to the outer circumferential surface of the rim, wherein
the resonance reducer includes:
a body including an elongated resonant space extending along the outer circumferential surface of the rim; and
an opening arranged at the body to connect, to an outside of the resonant space, at least one of two ends of the resonant space in an extension direction of the resonant space, and
the resonant space and the opening form a resonance tube.

2. The vehicle wheel according to claim 1, wherein
the opening is arranged at each of the two ends of the resonant space in the extension direction, and
the resonance tube is a resonance tube with two open ends.

3. The vehicle wheel according to claim 1 or 2, wherein
the body includes a first end and a second end in a direction of a central axis of the vehicle wheel,
the resonance reducer includes an engagement piece that protrudes outward in a radial direction of the vehicle wheel from the first end of the body and extends in a circumferential direction of the vehicle wheel,
the outer circumferential surface of the rim includes a wall portion extending in the radial direction,
the wall portion includes an engagement groove recessed in the direction of the central axis, and
the engagement piece is fitted to the engagement groove.

4. The vehicle wheel according to claim 3, wherein
the rim includes a well, and
the engagement groove is arranged on a side wall of the well.

5. The vehicle wheel according to claim 3 or 4, wherein
the engagement piece includes a basal end coupled to the body, and
the engagement piece is made of an elastic material and configured to be tilted in the direction of the central axis with respect to the basal end when elastically deformed.

6. The vehicle wheel according to any one of claims 3 to 5, wherein
the resonance reducer includes an engagement projection that protrudes in the direction of the central axis from the second end of the body,
the wall portion is a first wall portion and the engagement groove is a first engagement groove,
the outer circumferential surface of the rim includes a second wall portion extending in the radial direction,
the second wall portion includes a second engagement groove recessed in the direction of the central axis, and
the engagement projection is fitted to the second engagement groove.

7. The vehicle wheel according to any one of claims 1 to 6, wherein
an entirety of the resonance reducer is made of an elastic material,
the resonance reducer includes an opposing surface opposing the outer circumferential surface of the rim, the opposing surface including a protrusion that protrudes so as to project inward in a radial direction of the vehicle wheel, and
two ends of the body in a direction of a central axis of the vehicle wheel are engaged with the outer circumferential surface of the rim with a tip of the protrusion pressed against the outer circumferential surface of the rim.

8. The vehicle wheel according to any one of claims 1 to 7, wherein the resonant space extends in a circumferential direction of the rim along the outer circumferential surface of the rim such that the resonant space is folded back at at least one position.

9. A resonance reducer configured to be engaged with an outer circumferential surface of a rim so as to be fixed to the outer circumferential surface of the rim, the resonance reducer comprising:
a body extending in an arcuate manner;
a resonant space portion including an elongated resonant space extending in the body and an opening arranged at the body to connect, to an outside of the resonant space, at least one of two ends of the resonant space in an extension direction of the resonant space, the resonant space portion forming at least part of a resonance tube; and
an engagement portion configured to be engaged with the rim so as to fix the body to the rim.

10. The resonance reducer according to claim 9, wherein
the opening is arranged at each of the two ends of the resonant space in the extension direction, and
the resonance tube is a resonance tube with two open ends.

11. The resonance reducer according to claim 9 or 10, wherein
the body includes a first end and a second end in a direction of a central axis of an arc of the body, and
the engagement portion includes an engagement piece that protrudes outward in a radial direction of the arc from the first end of the body and extends in an extension direction of the body.

12. The resonance reducer according to claim 11, wherein
the engagement piece includes a basal end coupled to the body, and
the engagement piece is made of an elastic material and configured to be tilted in the direction of the central axis with respect to the basal end when elastically deformed.

13. The resonance reducer according to claim 11 or 12, wherein the engagement portion includes an engagement projection that protrudes in the direction of the central axis from the second end of the body.

14. The resonance reducer according to any one of claims 9 to 13, wherein
an entirety of the resonance reducer is made of an elastic material,
the resonance reducer includes an inner circumferential surface on an inner side of the arc in a radial direction of the arc, the inner surface including a protrusion that protrudes so as to project inward in the radial direction, and
the engagement portion is arranged at each of two ends of the body in a direction of a central axis of the arc.

15. The resonance reducer according to any one of claims 9 to 14, wherein the resonant space extends in an extension direction of the body such that the resonant space is folded back at at least one position.

## Amended claims

### Amended claims under Art. 19.1 PCT

1. A vehicle wheel, comprising:
a rim; and
a resonance reducer that is engaged with an outer circumferential surface of the rim so as to be fixed to the outer circumferential surface of the rim, wherein
the resonance reducer includes:
a body including an elongated resonant space extending along the outer circumferential surface of the rim; and
an opening arranged at the body to connect, to an outside of the resonant space, at least one of two ends of the resonant space in an extension direction of the resonant space, and
the resonant space and the opening form a resonance tube.

2. (Amended) The vehicle wheel according to claim 1, wherein
the opening is arranged at each of the two ends of the resonant space in the extension direction so that each of the two ends of the resonant space in the extension direction connects to the outside of the resonant space through a corresponding one of the openings, and
the resonance tube is a resonance tube with two open ends.

3. The vehicle wheel according to claim 1 or 2, wherein
the body includes a first end and a second end in a direction of a central axis of the vehicle wheel,
the resonance reducer includes an engagement piece that protrudes outward in a radial direction of the vehicle wheel from the first end of the body and extends in a circumferential direction of the vehicle wheel,
the outer circumferential surface of the rim includes a wall portion extending in the radial direction,
the wall portion includes an engagement groove recessed in the direction of the central axis, and
the engagement piece is fitted to the engagement groove.

4. The vehicle wheel according to claim 3, wherein
the rim includes a well, and
the engagement groove is arranged on a side wall of the well.

5. The vehicle wheel according to claim 3 or 4, wherein
the engagement piece includes a basal end coupled to the body, and
the engagement piece is made of an elastic material and configured to be tilted in the direction of the central axis with respect to the basal end when elastically deformed.

6. (Amended) The vehicle wheel according to any one of claims 3 to 5, wherein
the resonance reducer includes an engagement projection that protrudes in the direction of the central axis from the second end of the body,
the wall portion is a first wall portion and the engagement groove is a first engagement groove,
the outer circumferential surface of the rim includes a second wall portion extending in the radial direction,
the second wall portion includes a second engagement groove recessed in the direction of the central axis,
the engagement projection is fitted to the second engagement groove, and
the engagement piece includes a distal end located on an outer side of the engagement projection in the radial direction and engaged with the first wall portion.

7. The vehicle wheel according to any one of claims 1 to 6, wherein
an entirety of the resonance reducer is made of an elastic material,
the resonance reducer includes an opposing surface opposing the outer circumferential surface of the rim, the opposing surface including a protrusion that protrudes so as to project inward in a radial direction of the vehicle wheel, and
two ends of the body in a direction of a central axis of the vehicle wheel are engaged with the outer circumferential surface of the rim with a tip of the protrusion pressed against the outer circumferential surface of the rim.

8. The vehicle wheel according to any one of claims 1 to 7, wherein the resonant space extends in a circumferential direction of the rim along the outer circumferential surface of the rim such that the resonant space is folded back at at least one position.

9. (Amended) The vehicle wheel according to any one of claims 1 to 8, wherein an opening area of the opening is equal to a cross-sectional area of the resonant space.

10. (Amended) A resonance reducer configured to be engaged with an outer circumferential surface of a rim so as to be fixed to the outer circumferential surface of the rim, the resonance reducer comprising:
a body extending in an arcuate manner;
a resonant space portion including an elongated resonant space extending in the body and an opening arranged at the body to connect, to an outside of the resonant space, at least one of two ends of the resonant space in an extension direction of the resonant space, the resonant space portion forming at least part of a resonance tube; and
an engagement portion configured to be engaged with the rim so as to fix the body to the rim.

11. (Amended) The resonance reducer according to claim 10, wherein
the opening is arranged at each of the two ends of the resonant space in the extension direction so that each of the two ends of the resonant space in the extension direction connects to the outside of the resonant space through a corresponding one of the openings, and
the resonance tube is a resonance tube with two open ends.

12. (Amended) The resonance reducer according to claim 10 or 11, wherein
the body includes a first end and a second end in a direction of a central axis of an arc of the body, and
the engagement portion includes an engagement piece that protrudes outward in a radial direction of the arc from the first end of the body and extends in an extension direction of the body.

13. (Amended) The resonance reducer according to claim 12, wherein
the engagement piece includes a basal end coupled to the body, and
the engagement piece is made of an elastic material and configured to be tilted in the direction of the central axis with respect to the basal end when elastically deformed.

14. (Amended) The resonance reducer according to claim 12 or 13, wherein
the engagement portion further includes an engagement projection that protrudes in the direction of the central axis from the second end of the body, and
the engagement piece includes a distal end located on an outer side of the engagement projection in the radial direction and configured to be engaged with the first wall portion.

15. (Amended) The resonance reducer according to any one of claims 10 to 14, wherein
an entirety of the resonance reducer is made of an elastic material,
the resonance reducer includes an inner circumferential surface on an inner side of the arc in a radial direction of the arc, the inner surface including a protrusion that protrudes so as to project inward in the radial direction, and
the engagement portion is arranged at each of two ends of the body in a direction of a central axis of the arc.

16. (Added) The resonance reducer according to any one of claims 10 to 15, wherein
the resonant space extends in an extension direction of the body such that the resonant space is folded back at at least one position.

17. (Added) The resonance reducer according to any one of claims 10 to 16, wherein an opening area of the opening is equal to a cross-sectional area of the resonant space.
